(19) Europäisches Patentamt
European Patent Office
Office européen des brevets

(11) **EP 1 961 933 B1**

(12) **EUROPÄISCHE PATENTSCHRIFT**

(45) Veröffentlichungstag und Bekanntmachung des Hinweises auf die Patenterteilung:
**14.04.2010 Patentblatt 2010/15**

(51) Int Cl.:
*F01N 3/035* *(2006.01)*      *F01N 3/08* *(2006.01)*
*F01N 3/20* *(2006.01)*

(21) Anmeldenummer: **07003720.5**

(22) Anmeldetag: **23.02.2007**

(54) **Katalytisch aktiviertes Dieselpartikelfilter mit Ammoniak-Sperrwirkung**

Catalytically activated diesel particulate filter with ammoniac blocking action

Filtre à particule de diesel activé de manière catalytique et doté d'une action de blocage à l'ammoniac

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**27.08.2008 Patentblatt 2008/35**

(73) Patentinhaber: **Umicore AG & Co. KG**
**63457 Hanau-Wolfgang (DE)**

(72) Erfinder:
• **Pfeifer, Marcus, Dr.**
 **42719 Solingen (DE)**
• **Kögel, Markus, Dr.**
 **67354 Römerberg (DE)**

• **Schneider, Wolfgang, Dr.**
 **63517 Rodenbach (DE)**
• **Söger, Nicola, Dr.**
 **60385 Frankfurt am Main (DE)**
• **Adelmann, Katja, Dr.**
 **64297 Darmstadt (DE)**
• **Jeske, Gerald, Dr.**
 **63543 Neuberg (DE)**
• **Kreuzer, Thomas, Dr.**
 **61184 Karben (DE)**

(56) Entgegenhaltungen:
**WO-A-2005/064130**    **DE-A1- 3 929 297**
**DE-U1-202005 008 146**    **US-B1- 6 345 496**
**US-B1- 6 732 507**

EP 1 961 933 B1

EP 1 961 933 B1

**Beschreibung**

Die Erfindung betrifft ein katalytisch aktiviertes Dieselpartikelfilter, das zusätzlich zu den für einen Dieselpartikelfilter typischen Eigenschaften eine Ammoniak-Sperrwirkung aufweist. Die Erfindung betrifft weiterhin Abgasreinigungsanlagen zur Entfernung von Stickoxiden und Partikeln aus dem Abgas von überwiegend mager betriebenen Verbrennungsmotoren unter Verwendung des erfindungsgemäßen katalytisch aktivierten Dieselpartikelfilters in verschiedenen Ausgestaltungen.

Die im Abgas eines Kraftfahrzeugs enthaltenen Emissionen können in zwei Gruppen unterschieden werden. So bezeichnet der Begriff Primäremission Schadgase, die durch den Verbrennungsprozeß des Kraftstoffes im Motor direkt entstehen und bereits vor dem Passieren von Abgasreinigungseinrichtungen in der sogenannten Rohemission vorhanden sind. Als Sekundäremission werden solche Schadgase bezeichnet, die als Nebenprodukte in der Abgasreinigungsanlage entstehen können.

Das Abgas von Magermotoren enthält neben den üblichen Primäremissionen Kohlenmonoxid CO, Kohlenwasserstoffe HC und Stickoxide NOx einen relativ hohen Sauerstoffgehalt von bis zu 15 Vol.-%. Im Falle von Dieselmotoren kommt zu den gasförmigen Primäremissionen noch eine Partikelemission hinzu, die überwiegend aus Rußrückständen und gegebenenfalls organischen Agglomeraten besteht und aus einer partiell unvollständigen Kraftstoffverbrennung im Zylinder herrührt.

Die Einhaltung der Abgasgrenzwerte, die durch die zukünftig gültigen Abgasgesetzgebungen in Europa, Nordamerika und Japan vorgeschrieben sind, erfordert insbesondere im Falle von Dieselfahrzeugen neben einer Stickoxidentfernung aus dem Abgas ("Entstickung") auch dessen Reinigung von Partikeln. Die Schadgase Kohlenmonoxid und Kohlenwasserstoffe können aus dem mageren Abgas durch Oxidation an einem geeigneten Oxidationskatalysator leicht unschädlich gemacht werden. Die Reduktion der Stickoxide zu Stickstoff ist wegen des hohen Sauerstoffgehaltes wesentlich schwieriger. Für die Entfernung der Partikelemissionen ist der Einsatz spezieller Dieselpartikelfilter unumgänglich.

Bekannte Verfahren zur Entfernung von Stickoxiden aus Abgasen sind zum einen Verfahren unter Verwendung von Stickoxid-Speicherkatalysatoren ($NO_x$ Storage Catalyst NSC) und zum anderen Verfahren zur selektiven katalytischen Reduktion (Selective Catalytic Reduktion SCR) mittels Ammoniak an einem geeigneten Katalysator, kurz SCR-Katalysator.

Die Reinigungswirkung von Stickoxid-Speicherkatalysatoren beruht darauf, daß in einer mageren Betriebsphase des Motors die Stickoxide vom Speichermaterial des Speicherkatalysators vorwiegend in Form von Nitraten gespeichert werden. Ist die Speicherkapazität des NSC erschöpft, so muß der Katalysator in einer darauffolgenden fetten Betriebsphase des Motors regeneriert werden. Dies bedeutet, daß die zuvor gebildeten Nitrate zersetzt und die wieder freiwerdenden Stickoxide mit den reduzierenden Abgasanteilen am Speicherkatalysator zu Stickstoff, Kohlendioxid und Wasser umgesetzt werden. Die Arbeitsweise von Stickoxid-Speicherkatalysatoren wird ausführlich in der SAE-Schrift SAE 950809 beschrieben.

Da die Realisierung einer fetten Betriebsphase bei Dieselmotoren nicht ohne weiteres möglich ist und die Einstellung der zur Regeneration des NSC benötigten fetten Abgasbedingungen häufig Hilfsmaßnahmen wie eine Kraftstofinacheinspritzung in den Abgasstrang erfordert, wird zur Entstickung von Dieselfahrzeugabgasen bevorzugt das SCR-Verfahren eingesetzt.

Dabei wird, je nach Motorenkonzeption und Aufbau der Abgasanlage, zwischen "aktiven" und "passiven" SCR-Verfahren unterschieden, wobei bei "passiven" SCR-Verfahren in der Abgasanlage gezielt generierte Ammoniak-Sekundäremissionen als Reduktionsmittel zur Entstickung genutzt werden.

Beispielsweise beschreibt die US 6,345,496 B1 ein Verfahren zur Reinigung von Motorenabgasen, worin wiederholt alternierend magere und fette Luft/Kraftstoff-Verhältnisse eingestellt werden und das so erzeugte Abgas durch eine Abgasanlage geleitet wird, die anströmseitig einen Katalysator enthält, der nur unter fetten Abgasbedingungen $NO_x$ zu $NH_3$ umsetzt, während abströmseitig ein weiterer Katalysator angeordnet ist, der im mageren Abgas $NO_x$ adsorbiert oder einspeichert, dieses im fetten freisetzt, so daß es mit vom anströmseitigen Katalysator erzeugten $NH_3$ zu Stickstoff reagieren kann. Als Alternative kann gemäß der US 6,345,496 B1 abströmseitig ein $NH_3$-Adsorptions- und Oxidationskatalysator angeordnet sein, der im fetten $NH_3$ einspeichert, dieses im Mageren desorbiert und mit Sauerstoff zu Stickstoff und Wasser oxidiert. Weitere Offenbarungen solcher Verfahren sind bekannt.

Wie bereits der Einsatz der Stickoxid-Speicherkatalysatoren haben solche "passiven" SCR-Verfahren den Nachteil, daß einer ihrer wesentlichen Bestandteile die Bereitstellung fetter Abgasbedingungen ist, die in der Regel zur in-situ-Erzeugung von Ammoniak als Reduktionsmittel benötigt werden.

Demgegenüber wird in "aktiven" SCR-Verfahren das Reduktionsmittel aus einem mitgeführten Zusatztank mittels einer Einspritzdüse in den Abgasstrang eindosiert. Als solches kann außer Ammoniak auch eine leicht zu Ammoniak zersetzliche Verbindung wie zum Beispiel Harnstoff oder Ammoniumcarbamat verwendet werden. Ammoniak muß dem Abgas mindestens im stöchiometrischen Verhältnis zu den Stickoxiden zugeführt werden. Die genaue Dosierung des Ammoniaks bereitet wegen der stark schwankenden Betriebsbedingungen der Kraftfahrzeuge große Schwierigkeiten. Dies führt teilweise zu erheblichen Ammoniak-Durchbrüchen nach SCR-Katalysator. Zur Vermeidung der Ammoniak-Sekundäremission wird gewöhnlich hinter dem SCR-Katalysator ein Oxidationskatalysator angeordnet, der durchbrechendes Ammoniak zu Stickstoff oxidieren soll. Ein solcher Katalysator wird im folgenden als Ammoniak-Sperrkatalysator bezeichnet.

Ammoniak-Sperrkatalysatoren, die zur Oxidation von durchbrechendem Ammoniak hinter einem SCR-Katalysator angeordnet sind, sind in verschiedenen Ausführungsformen bekannt. So beschreibt die DE 3929297 C2 (US 5120695) eine solche Katalysatoranordnung. Demnach ist der Oxidationskatalysator als Beschichtung auf einem abströmseitigen Abschnitt des einstückigen als Vollextrudat in Wabenform ausgeführten Reduktionskatalysators aufgebracht, wobei der mit dem Oxidationskatalysator beschichtete Bereich 20 bis 50% des gesamten Katalysatorvolumens ausmacht. Der Oxidationskatalysator enthält als katalytisch aktive Komponenten wenigstens eines der Platingruppenmetalle Platin, Palladium und Rhodium, die auf Ceroxid, Zirkonoxid und Aluminiumoxid als Trägermaterialien abgeschieden sind.

Gemäß der EP 1 399 246 B1 können die Platingruppenmetalle auch direkt auf den Komponenten des Reduktionskatalysators als Trägermaterialien durch Imprägnieren mit löslichen Vorstufen der Platingruppenmetalle aufgebracht werden.

Gemäß JP 2005-238199 kann die Edelmetall-haltige Schicht eines Ammoniak-Oxidationskatalysators auch unter einer Beschichtung aus Titanoxid, Zirkonoxid, Siliziumoxid oder Aluminiumoxid und einem Übergangsmetall oder einem Selten-ErdMetall eingebracht werden.

Zur Entfernung von Partikelemissionen aus dem Abgas von Dieselfahrzeugen werden spezielle Dieselpartikelfilter eingesetzt, die zur Verbesserung ihrer Eigenschaften mit einer Oxidationskatalysator-haltigen Beschichtung versehen sein können. Eine solche Beschichtung dient, wie in der SAE-Schrift SAE 2005-01-1756 ausführlich beschrieben, der Erniedrigung der Aktivierungsenergie für den sauerstoffbasierten Partikelabbrand (Rußverbrennung) und somit der Absenkung der Rußzündtemperatur auf dem Filter, der Verbesserung des passiven Regenerationsverhaltens durch Oxidation von im Abgas enhaltenen Stickstoffmonoxid zu Stickstoffdioxid und der Unterdrückung von Durchbrüchen von Kohlenwasserstoff- und Kohlenmonoxidemissionen.

Ein besonderes Problem bei der Beschichtung von Filtersubstraten stellt die Erhöhung des Abgasgegendruckes durch die aufgebrachte Beschichtung dar. Der Abgasgegendruck erhöht sich schon durch die Rußablagerungen auf dem Filter während des Betriebes kontinuierlich und vermindert damit die Leistung des Motors. Das Filter muß daher von Zeit zu Zeit durch Abbrennen des Rußes regeneriert werden. Handelt es sich um ein beschichtetes Filtersubstrat, wird der Rußabbrand zwar in der Regel erleichtert, doch ist bereits der Abgasgegendruck des unbelegten, beschichteten Filters oft bereits höher als der eines nicht beschichteten Filters. Es ist daher nicht ohne weiteres möglich, die katalytische Funktionalität eines Partikelfilters durch Veränderungen der Beschichtung, beispielsweise durch Einbringen zusätzlicher katalytisch aktiver Komponenten, zu verändern.

Ist nun mit dem Ziel der Erfüllung gesetzlich vorgeschriebener Abgasgrenzwerte sowohl die Entstickung als auch die Entfernung von Partikeln aus dem Abgas von Dieselfahrzeugen erforderlich, so werden die beschriebenen Maßnahmen zur Entfernung einzelner Schadgase in einer entsprechenden konventionellen Abgasanlage durch Hintereinanderschaltung kombiniert. Beispielsweise beschreibt die WO 99/39809 ein Abgasreinigungssystem, in dem ein Oxidationskatalysator zur Oxidation von NO in $NO_x$ zu $NO_2$, ein Partikelfilter, eine Dosiereinrichtung für ein Reduktionsmittel und ein SCR-Katalysator aufeinander folgen. Zur Vermeidung von Ammoniak-Durchbrüchen ist nach dem SCR-Katalysator in der Regel noch ein zusätzlicher Ammoniak-Sperrkatalysator erforderlich, der die Reihe der Katalysatoren abströmseitig zum SCR-Katalysator fortsetzt.

DE 20 2005 008 146 U1 offenbart eine Abgasanlage für ein Kraftfahrzeug umfassend wenigstens einen regenerierbaren Partikelfilter und einen dem Partikelfilter nachgeschalteten SCR-Katalysator mit Ammoniak-Speicherfähigkeit, wobei der nachgeschaltete SCR-Katalysator, den Angaben in dieser Schrift zufolge, dazu dient, speziell die während der Regeneration des Partikelfilters auftretenden $NH_3$-Spitzen im Abgas abzufangen, weshalb der SCR-Katalysator dem Partikelfilter nachgeschaltet ist.

Solche konventionellen Systeme sind wegen der Vielzahl der benötigten Katalysatoren, teuer. Die Hintereinanderschaltung der Katalysatoren führt darüber hinaus zu einem hohen Bedarf an Bauraum in der Abgasanlage. Ihre Unterbringung gestaltet sich insbesondere in kleineren Fahrzeugen oft schwierig. Darüber hinaus führt die Hintereinanderschaltung von Katalysatoren, von denen jeder einen eigenen Staudruck auf das zu reinigende Abgas ausübt, zu ungünstigen Werten des Abgasgegendruckes über die gesamte Abgasanlage und vermindert somit die Leistung des Motors.

In einer bevorzugte Ausführungsforrn des in der DE 20 205 008 146 U1 beschriebenen Systems bilden der Partikelfilter und der SCR-Katalysator eine gemeinsame, kombinierte Einheit mit einem gemeinsamen Einsatzkörper, der üblicherweise ein monolithisches Keramiksubstrat ist. Der SCR-Katalysator wird hier nur durch eine entsprechende Beschichtung des Keramiksubstrates auf der Abströmseite gebildet.

Es ist Aufgabe der vorliegenden Erfindung, durch Verbeserung bestehender Partikelfiltertechnologien Bauteile zur Verfügung zu stellen, durch deren Einsatz Abgasreinigungsanlagen zur gleichzeitigen Entstickung und Entfernung von Partikeln aus dem Abgas von Magermotoren unter Einsparung von Abgasreinigungsaggregaten vereinfacht werden können. Zugleich ist es Aufgabe der vorliegenden Erfindung, einen Beitrag zur Minimierung des Abgasgegendruckes solcher Anlagen zu leisten und dabei Potential zur Kostenersparnis aufzuzeigen.

Diese Aufgabe wird durch ein katalytisch aktiviertes Dieselpartikelfilter gelöst, das einen Filterkörper und eine oxidationsaktive, katalytische Beschichtung sowie eine weitere, in der SCR-Reaktion katalytisch aktive Beschichtung enthält. Die in der SCR-Reaktion katalytisch aktive Beschichtung zeichnet sich dadurch aus, daß darin ein Ammoniak-Speichermaterial enthalten ist. Das Dieselpartikelfilter ist **dadurch gekennzeichnet, daß** eine Anordnung der Schichten eingehalten wird, so daß das zu reinigende Abgas zuerst die in der SCR-Reaktion katalytisch aktive Beschichtung und danach die oxidationsaktive, katalytische Beschichtung passiert.

Die Aufgabe wird weiterhin durch eine Abgasreinigungsanlage zur Entfernung von Stickoxiden und Partikeln aus dem Abgas von überwiegend mager betriebenen Verbrennungsmotoren gelöst, die neben einem zur Entfernung von Stickoxiden geeigneten Katalysator ein erfindungsgemäßes katalytisch aktiviertes Dieselpartikelfilter enthält.

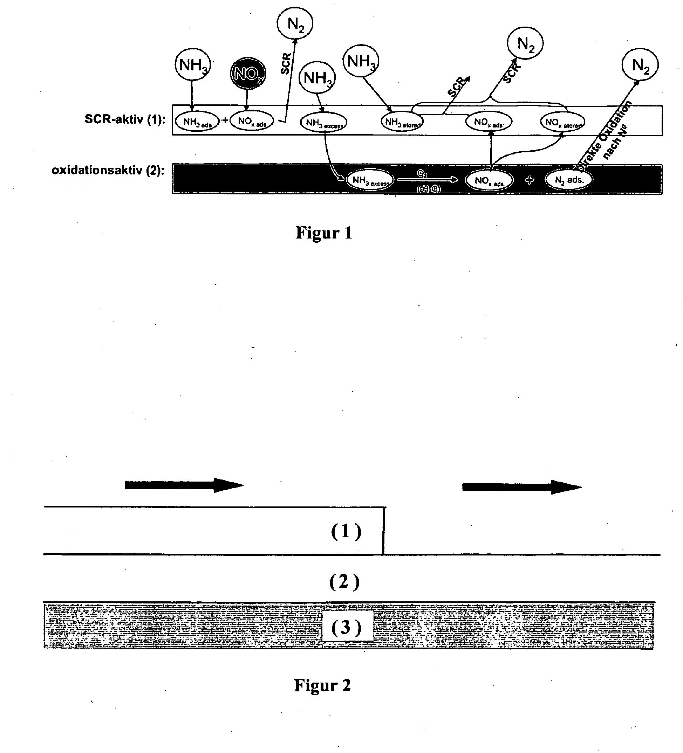

Durch die Kombination der in konventionellen Partikelfiltern bereits gegebenenfalls enthaltenenen oxidationsaktiven Beschichtung mit einer in der SCR-Reaktion katalytisch aktiven Beschichtung ("SCR-Beschichtung"; "SCR-aktive Schicht") enthält das Dieselpartikelfilter eine zusätzliche Ammoniak-Sperrwirkung. Die Kombination der Beschichtungen befähigt das Partikelfilter, zusätzlich zu den ohnehin vorhandenen Funktionen (Partikelfilterung / Partikelabbrand mit abgesenkter Rußzündtemperatur; verbessertes passives Regenerationsverhalten, NO-Oxidation, Unterdrückung von Durchbrüchen von CO- und HC-Emissionen), einerseits Stickoxide zu Stickstoff zu reduzieren und andererseits Ammoniak zu Stickstoff zu oxidieren. Passiert das zu reinigende Abgas zunächst die SCR-aktive Schicht und dann die oxidationsaktive Beschichtung, so beruht die Multifunktionalität hinsichtlich des Umsatzes der Stickstoff-haltigen Schadgase vermutlich auf folgendem, in Figur 1 schematisch dargestelltem Reaktionsablauf:

1) Stickoxide und Ammoniak aus dem Abgas werden auf der SCR-aktiven Schicht (1) absorbiert und reagieren in einer selektiven katalytischen Reaktion zu Wasser und Stickstoff, die nach Reaktionsabschluß desorbieren. Dabei ist Ammoniak in überstöchiometrischer Menge vorhanden, liegt also im Überschuß vor.

2) Überschüssiger Ammoniak diffundiert in die SCR-aktive Schicht (1). Ammoniak wird dort teilweise eingespeichert.

3) Nicht gespeicherter Ammoniak gelangt durch die SCR-aktive Schicht (1) hindurch zur oxidationsaktiven Beschichtung (2). Hier werden Stickstoff und Stickoxide erzeugt. Der entstandene Stickstoff diffundiert unverändert durch die SCR-aktive Schicht (1) hindurch und gelangt in die Atmosphäre.

4) Bevor die in der oxidationsaktiven Schicht (2) gebildeten Stickoxide das System verlassen, passieren sie erneut die SCR-aktive Beschichtung (1). Hier werden sie mit zuvor eingespeichertem Ammoniak $NH_{3\_stored}$ in einer SCR-Reaktion zu $N_2$ umgesetzt.

Damit der beschriebene Reaktionsablauf zu möglichst hohen Umsetzungen der Stickstoff-haltigen Schadgase führt, ist es vorteilhaft, wenn die SCR-aktive Beschichtung über eine hinreichende Ammoniak-Speicherfähigkeit verfügt. Um dies sicherzustellen, enthält die SCR-aktive Schicht im erfindungsgemäßen Dieselpartikelfilter ein Ammoniak-Speichermaterial. Ammoniak-Speichermaterialien im Sinne dieser Schrift sind Verbindungen, die acide Zentren enthalten, an denen Ammoniak gebunden werden kann. Der Fachmann unterscheidet diese in Lewis-saure Zentren zur Physisorption von Ammoniak und Brönstedt-saure Zentren zur Chemiesorption von Ammoniak. Ein Ammoniak-Speichermaterial in einem erfindungsgemäßen Dieselpartikelfilter muß einen signifikanten Anteil Brönstedt-saurer Zentren und gegebenenfalls Lewis-saurer Zentren enthalten, um eine ausreichende Ammoniak-Speicherfähigkeit zu gewährleisten.

Wie hoch die Ammoniak-Speicherfähigkeit eines katalytischen Materials ist, kann mit Hilfe der temperaturprogrammierten Desorption ermittelt werden. Bei dieser Standardmethode zur Charakterisierung heterogener Katalysatoren wird das zu charakterisierende Material nach Ausheizen von gegebenenfalls adsorbierten Komponenten wie beispielsweise Wasser mit einer definierten Menge Ammoniak-Gas beladen. Dies erfolgt bei Raumtemperatur. Dann wird die Probe unter Inertgas mit einer konstanten Heizrate aufgeheizt, so daß zuvor von der Probe aufgenommenes Ammoniak-Gas desorbiert wird und mit einer geeigneten Analytik quantitativ erfasst werden kann. Als Kenngröße für die Ammoniak-Speicherfähigkeit des Materials wird eine Ammoniakmenge in Milliliter pro Gramm Katalysatormaterial erhalten, wobei der Begriff "Katalysatormaterial" immer das zur Charakterisierung eingesetzte Material bezeichnet. Diese Kenngröße ist abhängig von der gewählten Aufheizrate. In dieser Schrift angegebene Werte beziehen sich immer auf Messungen mit einer Aufheizrate von 4 Kelvin pro Minute.

Die Ammoniak-Speicherkapazität der in der SCR-Reaktion katalytisch aktiven Beschichtung im erfindungsgemäßen Dieselpartikelfilter beträgt vorzugsweise mindestens 20 Milliliter Ammoniak pro Gramm Katalysatormaterial, besonders bevorzugt bis zu 70 Milliliter pro Gramm Katalysatormaterial. Besonders gut geeignet sich SCR-aktive Schichten mit einer Ammoniak-Speicherkapazität von 25 bis 40 Milliliter Ammoniak pro Gramm Katalysatormaterial.

SCR-aktive Beschichtungen mit den beschriebenen Ammoniak-Speichereigenschaften enthalten bevorzugt Zeolithe, die mit Wasserstoffkationen ("H-Zeolithe") oder Übergangsmetallkationen ausgetauscht wurden. Gut geeignet sind mit Eisen oder Kupfer oder Eisen und Kupfer ausgetauschte Zeolithe, wobei es sich vorzugsweise um beta-Zeolith oder Y-Zeolith oder Faujasit oder Mordenit oder ZSM-5 oder Kombinationen davon handelt.

In besonders gut geeigneten Ausgestaltungen der Erfindung ist die SCR-aktive Beschichtung im erfindungsgemäßen Dieselpartikelfilter frei von Edelmetallen. Dadurch wird sichergestellt, daß die Selektivität in der SCR-Reaktion möglichst hoch ist. Zur weiteren Verbesserung der SCR-Aktivität können außerdem Zusätze ausgewählt aus der Gruppe bestehend aus Ceroxid, Titanoxid, Zirkoniumoxid, Vanadiumoxid, Molybdänoxid, Wolframoxid, Siliziumdioxid, sowie Mischungen und /oder Mischoxide davon enthalten sein.

Viele konventionelle Dieselpartikelfilter enthalten eine oxidationsaktive Beschichtung. Im erfindungsgemäßen Dieselpartikelfilter ist diese bevorzugt frei von Zeolithen. In besonders gut geeigneten Ausgestaltungen der Erfindung enthält die oxidationsaktive, katalytische Beschichtung Platin oder Palladium oder Mischungen davon auf einem Trägermaterial ausgewählt aus der Gruppe bestehend aus hochoberflächigem, aktivem Aluminiumoxid, Ceroxid, Zirkonoxid, Titanoxid, Siliziumoxid und Mischungen oder Mischoxiden davon.

Die oxidationsaktive, katalytische Beschichtung und die in der SCR-Reaktion katalytisch aktive Beschichtung werden in definierter Weise auf einen zur Abscheidung von Dieselpartikeln geeigneten Filterkörper aufgebracht. Geeignet sind Filterkörper ausgewählt aus der Gruppe der keramischen Wandflußfiltersubstrate, der Sintermetallfilterkörper oder der keramischen oder metallischen Schaumstrukturen. Bevorzugt eingesetzt werden keramische Wandflußfiltersubstrate, die Wände mit einer offenporigen Struktur mit einer Porosität von 40 bis 80 % und einem mittleren Porendurchmesser von 9 bis 30 Micrometern aufweisen. Besonders bevorzugt werden keramische Wandflußfiltersubstrate mit einer Porosität von 45 bis 65 % und einem mittleren Porendurchmesser von 9 bis 22 Micrometern eingesetzt.

Bei der Aufbringung der Beschichtungen auf den Filterkörper ist einerseits darauf zu achten, daß die für den beschriebenen Reaktionsmechanismus erforderliche Anordnung der Schichten eingehalten wird, so daß das zu reinigende Abgas zuerst die in der SCR-Reaktion katalytisch aktive Beschichtung und danach die oxidationsaktive, katalytische Beschichtung passiert. Weiterhin muß die Möglichkeit der Rückdiffusion des Abgases aus der oxidationsaktiven Beschichtung durch die SCR-aktive Beschichtung in den Gasraum gegeben sein. Andererseits ist dafür Sorge zu tragen, daß die Staudruckeigenschaften des resultierenden katalytisch aktivierten Dieselpartikelfilters nicht wesentlich verschlechtert werden. Diese Summe der Anforderungen stellt eine Herausforderung bei der Herstellung des erfindungsgemäßen katalytisch aktivierten Dieselpartikelfilters dar.

Ungeachtet der Art des eingesetzten Filterkörpers wird zunächst die oxidationsaktive, katalytische Beschichtung (2) auf den als Tragkörper dienenden Filterkörper (3) aufgebracht, wobei sie die gesamte Länge des Bauteils einnimmt. Das resultierende oxidationskatalytisch beschichtete Filter stellt dann den Tragkörper für die in der SCR-Reaktion katalytisch aktive Beschichtung (1) dar. Somit wird die SCR-aktive Beschichtung auf die oxidationsaktive Beschichtung aufgebracht. In der bevorzugten Ausführungsform nimmt die SCR-aktive Beschichtung nur einen Teil der Länge des Bauteils ein und ist auf der Anströmseite angeordnet, wie in Figur 2 dargestellt. Die Strömungsrichtung des Abgases ist mit einem Pfeil angegeben. Durch diese Anordnung kommt das zu reinigende Abgas entsprechend den Erfordernissen aus dem angenommenen Reaktionsmechanismus zunächst mit der SCR-aktiven Beschichtung in Kontakt, bevor es an der oxidationsaktiven Beschichtung umgesetzt werden kann. Auch die Rückdiffusion des Abgases durch die SCR-aktive Beschichtung in den Gasraum, für die ein enger Kontakt der beiden Schichten Voraussetzung ist, ist gesichert. Darüber hinaus wird durch die Reduzierung der SCR-aktiven Beschichtung auf einen Teil der Bauteillänge

a) die Minimierung des Staudruckes des Bauteils sichergestellt und

b) gewährleistet, daß die für einen katalytisch beschichteten Dieselpartikelfilter vorteilhaften Eigenschaften wie der Partikelabbrand bei abgesenkter Rußzündtemperatur, das verbesserte passive Regenerationsverhalten und die Unterdrückung von Durchbrüchen von CO- und HC-Emissionen erhalten bleiben.

Die Frage, welchen Anteil der Länge des Bauteils die SCR-aktive Beschichtung einnehmen soll, ist abhängig vom Stoffmengenstrom des zu reinigenden Abgases und der Konzentration der darin enthaltenen Stickstoff-haltigen Schadgase. Sie ist so zu bemessen, daß auftretende Ammoniak-Durchbrüche vollständig zu Stickstoff umgesetzt werden können. Bevorzugt nimmt die in der SCR-Reaktion aktive katalytische Beschichtung 5 bis 50 % der Länge des Bauteils ein, besonders bevorzugt 10 bis 30 %.

In den bevorzugten Ausgestaltungen der Erfindung wird ein Wandflußfiltersubstrat verwendet. Zur Minimierung des Staudrucks des erfindungsgemäßen katalytisch aktivierten Dieselpartikelfilters wird die oxidationsaktive, katalytische Beschichtung über die gesamte Länge des Bauteils in die Poren der Wände des keramischen Wandflußfiltersubstrates eingebracht, so daß sie homogen in der jeweiligen Wand des Wandflußfiltersubstrates verteilt ist. Wie diese Beschichtung durchzuführen ist, ist beispielsweise in der DE 10 2004 040 548 A1 der Anmelderin beschrieben.

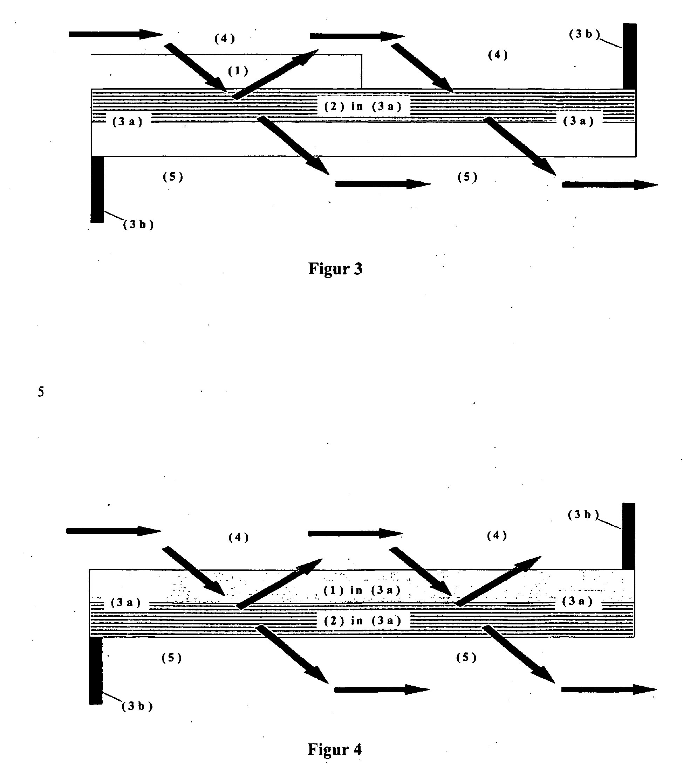

Die Figuren 3 und 4 zeigen besonders bevorzugte Beschichtungsanordnungen in katalytisch aktivierten Wandflußfiltersubstraten als Ausschnitte aus der Struktur mit jeweils einen Anströmkanal (4) und einen Abströmkanal (5). Die Strömungsrichtung des Abgases ist durch Pfeile angegeben. An- und Abströmkanal sind durch eine für das Abgas durchlässige Wand (3a) mit offenporiger Struktur voneinander getrennt und zur Ab- bzw. Anströmseite durch einen gasdichten Kanalabschluß (3b) verschlossen.

Die in Figur 3 dargestellte Ausführungsform des erfindungsgemäßen katalytisch aktivierten Dieselpartikelfilters wird bevorzugt dann gewählt, wenn ein herkömmliches, eine oxidationsaktive Beschichtung enthaltendes Wandflußfiltersubstrat ohne Verlust seiner bisherigen Eigenschaften um eine Ammoniak-Sperrfunktion erweitert werden soll. Solche herkömmlichen, katalytisch aktivierten Wandflußfiltersubstrate weisen nicht selten eine in der Wand homogen verteilte, oxidationsaktive Beschichtung über die gesamte Länge des Bauteils auf, die die Poren bis zur anströmseitigen Oberfläche ausfüllt. Zur Erzeugung der Ammoniak-Sperrfunktion wird auf ein solches Partikelfilter auf der Anströmseite eine in der SCR-Reaktion katalytisch aktive Beschichtung über einen Teil der Länge des Bauteils aufgebracht. Bevorzugt ist die SCR-aktive Schicht auf der anströmseitigen Oberfläche der Wand angeordnet und nimmt 5 bis 50 % der Länge des Bauteils ein, besonders bevorzugt 10 bis 30 %.

Die in Figur 4 dargestellte Ausführungsform wird besonders bevorzugt, wenn das erfindungsgemäße katalytisch aktivierte Dieselpartikelfilter in einer Abgasreinigungsanlage eingesetzt wird, die einerseits über eine anströmseitig vorgeschaltete hochaktive Oxidationsfunktion zur Eliminierung von CO- und HC-Durchbrüchen verfügt, in der andererseits verstärkter Bedarf zur Entstickung des Abgases besteht, sofern das erfindungsgemäße Dieselpartikelfilter darin in der Regel mit Abgastemperaturen im Bereich von 100 bis 250°C ausgesetzt ist. In dieser Ausführungsform sind sowohl die oxidationsaktive Beschichtung als auch die SCR-aktive Beschichtung über die gesamte Länge des Bauteils homogen in der Wand verteilt, wobei die SCR-aktive Beschichtung die Poren bis zur anströmseitigen Oberfläche der Wand füllt, während die oxidationsaktive Beschichtung die Poren bis zur abströmseitigen Oberfläche der Wand hin füllt. Diese Anordnung erfüllt ebenfalls alle durch den angenommenen Reaktionsmechanismus und die geforderten Staudruckeigenschaften bestehenden Erfordernisse. Durch die Anordnung der SCR-aktiven Beschichtung über die gesamte Länge des Bauteils zeigt das in dieser Weise katalytisch aktivierte Dieselpartikelfilter nicht nur eine Ammoniak-Sperrfunktion, sondern darüberhinaus eine vollwertige Tieftemperatur-SCR-Aktivität.

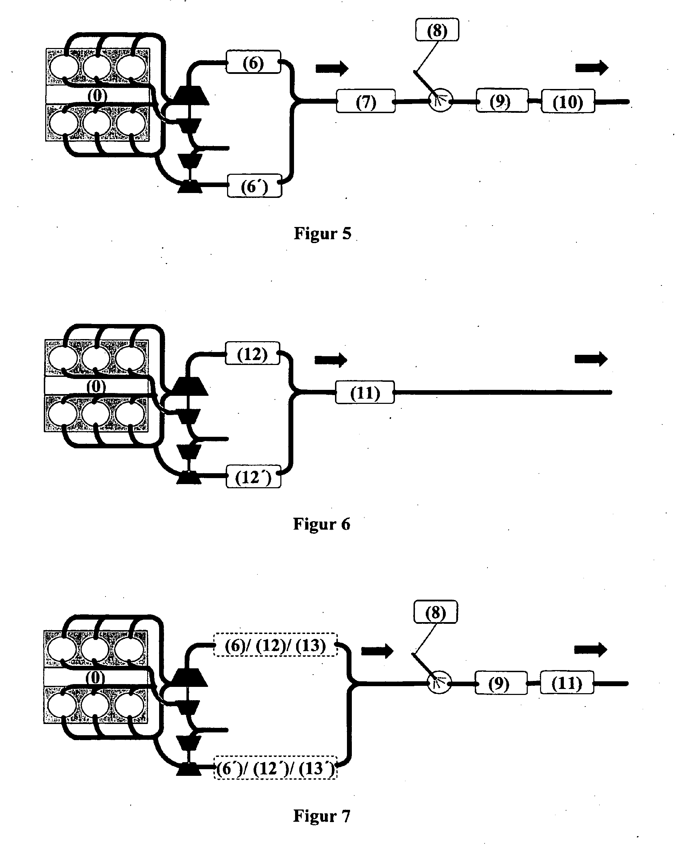

Durch den Einsatz des erfindungsgemäßen katalytisch aktivierten Dieselpartkelfilters können herkömmliche Abgasreinigungsanlagen zur Entfernung von Stickoxiden und Partikeln aus dem Abgas von überwiegend mager betriebenen Verbrennungsmotoren erheblich vereinfacht werden. Figur 5 zeigt beispielhaft eine Abgasanlage nach dem Stand der Technik, wie sie in der WO 99/39809 beschrieben ist, in der Ausführung als zweiflutige Anlage. Darin schließt sich an jede Zylinderbank des Motors (0) ein Abgasanlagenteil an, der einen Dieseloxidationskatalysator (6; 6') enthält. Nach der Zusammenführung der Abgasstränge wird in Strömungsrichtung nacheinander ein gegebenenfalls katalytisch aktiviertes Dieselpartikelfilter (7), eine Dosiereinrichtung für das in der SCR-Reaktion benötigte Reduktionsmittel (8) wie beispielsweise Harnstoff und ein SCR-Katalysator (9) angeordnet. Zur Vermeidung von Ammoniak-Durchbrüchen ist ein nachgeschalteter Ammoniak-Sperrkatalysator (10) erforderlich.

Durch die Verwendung des erfindungsgemäßen Bauteils können die wesentlichen Bestandteile der solchen Abgasreinigungsanlage reduziert werden. Zur Entfernung von Stickoxiden und Partikeln aus dem Abgas von überwiegend mager betriebenen Verbrennungsmotoren genügt es nun, wenn eine entsprechende Anlage einen zur Entfernung von Stickoxiden geeigneten Katalysator und ein erfindungsgemäßes katalytisch aktiviertes Dieselpartikelfilter enthält. Bei dem zur Entfernung von Stickoxiden geeigneten Katalysator kann es sich um einen auf der Anströmseite des erfindungsgemäßen Dieselpartikelfilters (11) angeordneten Stickoxid-Speicherkatalysator (12, 12') handeln. Eine solche Ausführungform ist für den Fall einer zweiflutigen Ausgestaltung der Anlage in Figur 6 schematisch dargestellt.

In einer bevorzugten Form der erfindungsgemäßen Abgasanlage wird als zur Entstickung geeignetem Katalysator ein SCR-Katalysator (9) mit einer Einrichtung zur Dosierung von Ammoniak oder einer zu Ammoniak zersetzlichenverbindung (8) eingesetzt, der sich ebenfalls auf der Anströmseite des erfindungsgemäßen Dieselpartikelfilters (11) befindet. Eine solche Ausführungsform ist für den Fall einer zweiflutigen Ausgestaltung der Anlage schematisch in Figur 7 dargestellt. Dabei kann es für die Anwendung in einigen Fahrzeugtypen von Vorteil sein, wenn in der Abgasreinigungsanlage zwischen dem überwiegend mager betriebenen Verbrennungsmotor (0) und der Einrichtung zur Dosierung von Ammoniak oder einer zu Ammoniak zersetzlichen Verbindung (8) ein Dieseloxidationskatalysator (6, 6') oder ein Dreiwegekatalysator (13, 13') oder ein Stickoxidspeicherkatalysator (12,12') oder Kombinationen davon angeordnet sind.

Die nachfolgenden Figuren und Beispiele sollen die Erfindung näher erläutern.

**Figur 1:** Funktionsprinzip des erfindungsgemäßen Dieselpartikelfilters bei der Umsetzung Stickstoff-haltiger Schadgase.

**Figur 2:** Anordnung der SCR-aktiven Beschichtung (1) und der oxidationsaktiven Beschichtung (2) auf einem als Tragkörper dienenden Filterkörper (3) in einem erfindungsgemäßen, katalytisch aktivierten Dieselpartikelfilter.

**Figur 3:** Bevorzugte Anordnung der SCR-aktiven Beschichtung (1) in einem erfindungsgemäße, katalytisch aktivierten Dieselpartikelfilter, wobei die oxidationsaktive, katalytische Beschichtung (2) homogen in der Wand (3a) des Wandflußfiltersubstrates verteilt ist und mit dem Anströmkanal (4) in direktem Kontakt steht; (5) bezeichnet den Abströmkanal, (3b) die jeweils gasdichten Kanalabschlüsse.

**Figur 4:** Bevorzugte Anordnung der Beschichtungen in einem erfindungsgemäßen katalytisch aktivierten Wandflußfiltersubstrat, in dem beide Beschichtungen homogen in der Wand (3a) verteilt sind, wobei die SCR-aktive Beschichtung (1) die Wand (3a) zum Anströmkanal (4) hin ausfüllt, während die oxidationsaktive Beschichtung (2) die Wand (3a) zum Abströmkanal (5) hin ausfüllt; (3b) bezeichnet die jeweils gasdichten Kanalabschlüsse.

**Figur 5:** Abgasreinigungsanlage zur Entfernung von Stickoxiden und Partikeln aus dem Abgas von überwiegend mager betriebenen Verbrennungsmotoren (0) nach dem Stand der Technik in zweiflutiger Ausführung, die einen Dieseloxidationskatalysator (6, 6'), ein gegebenenfalls katalytisch aktiviertes Dieselpartikelfilter (7), eine Dosiereinrichtung für das in der SCR-Reaktion benötigte Reduktionsmittel (8) wie beispielsweise Harnstoff, einen SCR-Katalysator (9) und einen nachgeschalteter Ammoniak-Sperrkatalysator (10) enthält.

**Figur 6:** Erfindungsgemäße Abgasreinigungsanlage zur Entfernung von Stickoxiden und Partikeln aus dem Abgas von überwiegend mager betriebenen Verbrennungsmotoren (0) in zweiflutiger Ausführung, die ein erfindungsgemäßes katalytisch aktiviertes Dieselpartikelfilter (11) und anströmseitig einen Stickoxid-Speicherkatalysator (12, 12') enthält.

**Figur 7:** Erfindungsgemäße Abgasreinigungsanlage zur Entfernung von Stickoxiden und Partikeln aus dem Abgas von überwiegend mager betriebenen Verbrennungsmotoren (0) in zweiflutiger Ausführung, die ein erfindungsgemäßes katalytisch aktivertes Dieselpartikelfilter (11) und anströmseitig einen SCR-Katalysator (9) mit einer Einrichtung zur Dosierung von Ammoniak oder einer zu Ammoniak zersetzlichenverbindung (8) enthält. Optional können zwischen Motor (0) und Dosiereinrichtung (8) ein Dieseloxidationskatalysator (6, 6') oder/und ein Stickoxid-Speicherkatalysator (12, 12') oder/und ein Dreiwegekatalysator (13, 13') angeordnet sein.

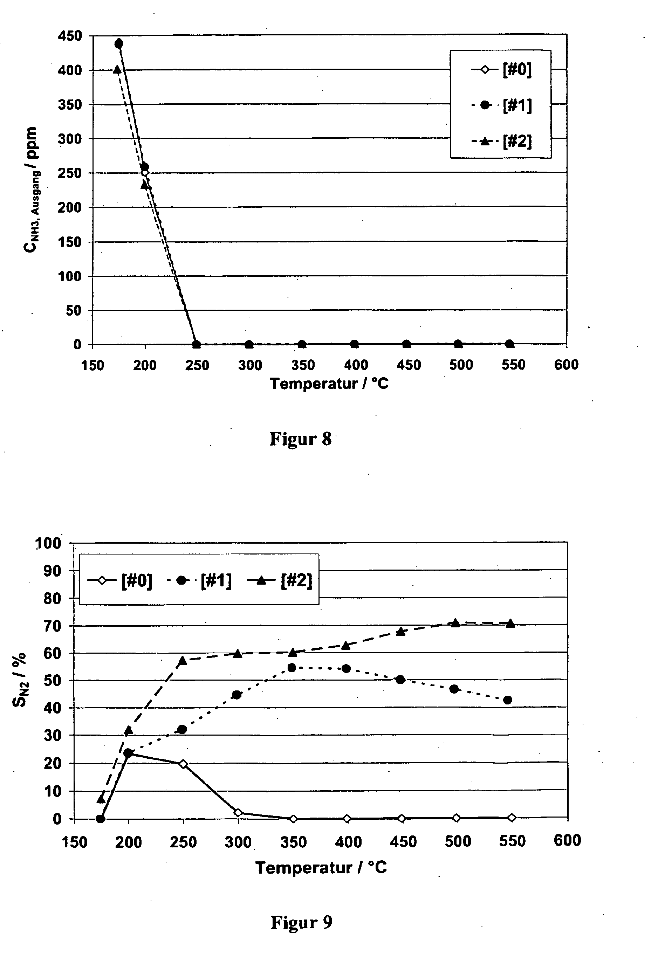

**Figur 8:** Aktivität in der Ammoniakoxidation, gemessen an einem mit einer oxidationsaktiven Beschichtung versehenen Wandflußfiltersubstrat nach dem Stand der Technik ([#0]; 0), und an zwei erfindungsgemäßen katalytisch aktivierten Dieselpartikelfilter mit einer oxidationsaktiven und einer SCR-aktiven Beschichtung. Das erfindungsgemäße Dieselpartikelfilter [#1] (●) enthält in der SCR-aktiven Beschichtung einen mit Eisen ausgetauschten Zeolithen, das erfindungsgemäße Dieselpartikelfilter [#2] (▲) einen mit Kupfer ausgetauschten Zeolithen.

**Figur 9:** Selektivität zu Stickstoff in der Ammoniakoxidation, gemessen an einem mit einer oxidationsaktiven Beschichtung versehenen Wandflußfiltersubstrat nach dem Stand der Technik ([#0]; 0), und an zwei erfindungsgemäßen katalytisch aktivierten Dieselpartikelfilter mit einer oxidationsaktiven und einer SCR-aktiven Beschichtung. Das erfindungsgemäße Dieselpartikelfilter [#1] (●) enthält in der SCR-aktiven Beschichtung einen mit Eisen ausgetauschten Zeolithen, das erfindungsgemäße Dieselpartikelfilter [#2] (▲) einen mit Kupfer ausgetauschten Zeolithen.

In den nachstehend beschriebenen Beispielen wurden verschiedene Ausführungsformen der erfindungsgemäßen katalytisch aktivierten Dieselpartikelfilter hergestellt. Ihre Reaktivität und Selektivität in der Ammoniakoxidation wurde im Vergleich zu dem im Vergleichsbeispiel hergestellten herkömmlichen Dieselpartikelfilter an einer Modellgasanlage untersucht. Dabei wurden folgende Testbedingungen gewählt:

| *Zusammensetzung des Modellgases* | |
|---|---|
| $NH_3$ *[Vol.-ppm]:* | *450* |
| $O_2$ *[Vol-%]:* | *5* |
| $H_2O$ *[Vol.-%]* | *1,3* |
| $N_2$*:* | *Rest* |

(fortgesetzt)

| Allgemeine Testbedingungen | |
|---|---|
| Raumgeschwindigkeit [h⁻¹]: | 60.000 |
| Temperatur [°C]: | 550, 500; 450; 400; 350; 300; 250; 200; 175 |
| Konditionierung vor Meßbeginn: | Modellgas-Atmoshhäre; 600°C; einige Minuten |

Mit Hilfe einer geeigneten Gasanalytik wurden die Konzentrationen von Ammoniak, Distickstoffmonoxid, Stickstoffmonoxid und Stickstoffdioxid nach Katalysator erfaßt. Unter der begründeten Annahme, daß außer diesen Stickstoffhaltigen Gasen und molekularem Stickstoff keine weiteren Stickstoff-haltigen Reaktionsprodukte aus der Ammoniak-Oxidation entstehen, kann aus der folgenden Bilanzgleichung die Konzentration des Reaktionszielproduktes $N_2$ ermittelt werden:

$$C_{N_2} = 1/2 \cdot \left( C_{NH_3,Eingang} - C_{NH_3,Ausgang} - 2 \cdot C_{N_2O} - C_{NO} - C_{NO_2} \right)$$

Aus der so erhaltenen Stickstoflkonzentration und der dosierten Ammoniak-Konzentration berechnet sich die Selektivität zu Stickstoff wie folgt:

$$S_{N_2}[\%] = \frac{C_{N_2}}{0,5 \cdot C_{NH_3,Eingang}} \cdot 100$$

Zur Beurteilung der Meßergebnisse wurden die Konzentration des Ammoniaks nach Katalysator und die Selektivität zu Stickstoff als Funktion der Temperatur aufgetragen. Die Ergebnisse sind in den Figuren 8 und 9 dargestellt.

**Vergleichsbeispiel:**

Ein Wandflußfiltersubstrat aus Siliciumcarbid wurde mit einer herkömmlichen oxidationsaktiven Beschichtung versehen, die mit Hilfe der in der DE 10 2004 040 548 A1 beschriebenen Arbeitsweise in die Wand eingebracht wurde.
Das Filtersubstrat hatte einen Durchmesser von 14,4 Zentimetern, eine Länge von 7,62 Zentimetern und wies 47 Zellen pro Quadratzentimeter mit einer Wandstärke von 0,3 Millimetern auf. Die Wände des Filtersubstrats wiesen Poren mit einem mittleren Durchmesser von 20 Micrometern auf, die Porosität der Wände betrug 60 %.
Die oxidationsaktive Beschichtung enthielt im wesentlichen Platin, das auf einem mit Lanthanoxid dotierten, hochoberflächigen Aluminiumoxid geträgert war. Die aufgebrachte Beschichtungsmenge wurde so gewählt, daß das fertige Dieselpartikelfilter 0,7 g/L Edelmetall, bezogen auf das Volumen des beschichteten Filtersubstrats, enthielt.
Aus dem fertigen Dieselpartikelfilter wurden drei Bohrkerne mit einem Durchmesser von 2,54 Zentimetern entnommen. An einem dieser Bohrkerne [#0] wurde in einer Modellgasanlage das charakteristische Ammoniak-Oxidationsverhalten nach oben beschriebenem Verfahren untersucht.

**Beispiel 1:**

Auf einen zweiten Bohrkern, der dem Dieselpartikelfilter aus dem Vergleichsbeispiel entnommen worden war, wurde auf der Anströmseite eine in der SCR-Reaktion aktive Beschichtung, die überwiegend mit Eisen ausgetauschte Zeolithe enthielt, aufgebracht. Die Länge der beschichteten Zone betrug 2,54 Zentimeter, also 33 % der Länge des Gesamtbauteils. Es wurden 50 g/L des SCR-aktiven Materials, bezogen auf das Volumen des Filtersubstrates, aufgebracht.
Das charakteristische Ammoniak-Oxidationsverhalten des so erhaltenen erfindungsgemäßen katalytisch aktivierten Dieselpartikelfilters [#1] wurde in der Modellgasanlage nach dem oben beschriebenem Verfahren untersucht.

**Beispiel 2:**

Auf den dritten Bohrkern, der dem Dieselpartikelfilter aus dem Vergleichsbeispiel entnommen worden war, wurde auf der Anströmseite eine in der SCR-Reaktion aktive Beschichtung, die überwiegend mit Kupfer ausgetauschte Zeolithe enthielt, aufgebracht. Die Länge der beschichteten Zone betrug 2,54 Zentimeter, also 33 % der Länge des Gesamtbauteils. Es wurden 50 g/L des SCR-aktiven Materials, bezogen auf das Volumen des Filtersubstrates, aufgebracht.

Auch das charakteristische Ammoniak-Oxidationsverhalten dieses erfindungsgemäßen katalytisch aktivierten Dieselpartikelfilters [#2] wurde in der Modellgasanlage nach dem oben beschriebenem Verfahren untersucht.

Die Figuren 8 und 9 zeigen das Ergebnis der Untersuchungen im Modellgas.

In Figur 8 ist die Ammoniak-Konzentration nach Katalysator als Funktion der Reaktionstemperatur aufgetragen. Diese Angabe dient als Maß für die generelle Aktivität der untersuchten Dieselpartikelfilter in der Ammoniak-Oxidation. Es ist offensichtlich, daß sich die erfindungsgemäßen Dieselpartikelfilter in ihrer generellen Ammoniak-Oxidationsaktivität nicht wesentlich vom herkömmlichen Dieselpartikelfilter unterscheiden: Oberhalb von 250°C wird Ammoniak restlos aufoxidiert.

Der wesentliche Vorteil der erfindungsgemäßen katalytisch aktivierten Dieselpartikelfilter zeigt sich in der Selektivität der Ammoniak-Oxidation zu Stickstoff. Während diese beim herkömmlichen Dieselpartikelfilter ($\Diamond$) oberhalb von 300°C verloren geht, da Ammoniak vollständig zu Stickoxiden (überwiegend $NO_2$) überoxidiert wird, zeigen die erfindungsgemäßen Dieselpartikelfilter über den gesamten Temperaturbereich hervorragende Selektivitätsdaten. Die besten Ergebnisse mit Selektivitätswerten von über 70 % werden für das Dieselpartikelfilter [#2] ($\blacktriangle$) mit der Kupfer-haltigen, SCR-aktiven Beschichtung beobachtet, doch zeigt auch das erfindungsgemäße Dieselpartikelfilter [#1] ($\bullet$) mit der Eisen-haltigen SCR-aktiven Beschichtung im Temperaturbereich. 250 bis 550°C gute Selektivitätswerte mit über 30 %.

Somit eignen sich die erfindungsgemäßen katalytisch aktivierten Dieselpartikelfilter mit Ammoniak-Sperrwirkung hervorragend für den Einsatz in Abgasanlagen, die der gleichzeitigen Entfernung von Stickstoff-haltigen Schadgasen und Partikeln dienen, und die nun in der beschriebenen Weise erfindungsgemäß vereinfacht werden können.

**Patentansprüche**

1.  Katalytisch aktiviertes Dieselpartikelfilter enthaltend einen Filterkörper und eine oxidationsaktive, katalytische Beschichtung und eine weitere, in der SCR-Reaktion katalytisch aktive Beschichtung enthält, in der ein Ammoniak-Speichermaterial enthalten ist,
    **dadurch gekennzeichnet,**
    **dass** eine Anordnung der Schichten eingehalten wird, so daß das zu reinigende Abgas zuerst die in der SCR-Reaktion katalytisch aktive Beschichtung und danach die oxidationsaktive, katalytische Beschichtung passiert.

2.  Katalytisch aktiviertes Dieselpartikelfilter nach Anspruch 1,
    **dadurch gekennzeichnet,**
    **dass** die Ammoniak-Speicherkapazität der in der SCR-Reaktion katalytisch aktiven Beschichtung mindestens 20 Milliliter pro Gramm Katalysatormaterial beträgt.

3.  Katalytisch aktiviertes Dieselpartikelfilter nach Anspruch 2,
    **dadurch gekennzeichnet,**
    **dass** die in der SCR-Reaktion katalytisch aktive Beschichtung einen oder mehrere mit Wasserstoffkationen oder Übergangsmetallkationen ausgetauschte Zeolithe enthält.

4.  Katalytisch aktiviertes Dieselpartikelfilter nach Anspruch 3,
    **dadurch gekennzeichnet,**
    **dass** die in der SCR-Reaktion katalytisch aktive Beschichtung einen oder mehrere mit Eisen oder Kupfer oder Eisen und Kupfer ausgetauschte Zeolithe enthält.

5.  Katalytisch aktiviertes Dieselpartikelfilter nach Anspruch 3,
    **dadurch gekennzeichnet,**
    **dass** die in der SCR-Reaktion katalytisch aktive Beschichtung beta-Zeolith oder Y-Zeolith oder Faujasit oder Mordenit oder ZSM-5 oder Kombinationen davon davon enthält.

6.  Katalytisch aktiviertes Dieselpartikelfilter nach Anspruch 3,

**dadurch gekennzeichnet,**
**dass** die in der SCR-Reaktion katalytisch aktive Beschichtung frei ist von Edelmetallen

7.  Katalytisch aktiviertes Dieselpartikelfilter nach Anspruch 1,
    **dadurch gekennzeichnet,**
    **dass** die oxidationsaktive, katalytische Beschichtung frei ist von Zeolithen.

8.  Katalytisch aktives Dieselpartikelfilter nach Anspruch 7,
    **dadurch gekennzeichnet,**
    **dass** die oxidationsaktive, katalytische Beschichtung Platin oder Palladium oder Mischungen davon auf einem Trägermaterial ausgewählt aus der Gruppe bestehend aus hochoberflächigem, aktivem Aluminiumoxid, Ceroxid, Zirkonoxid, Titanoxid, Siliziumoxid und Mischungen oder Mischoxiden davon enthält.

9.  Katalytisch aktiviertes Dieselpartikelfilter nach Anspruch 1,
    **dadurch gekennzeichnet,**
    **dass** der Filterkörper ausgewählt ist aus der Gruppe der keramischen Wandflußfiltersubstrate, der Sintermetallfilterkörper oder der keramischen oder metallischen Schaumstrukturen.

10. Katalytisch aktiviertes Dieselpartikelfilter nach Anspruch 9,
    **dadurch gekennzeichnet,**
    **dass** der Filterkörper ausgewählt ist aus der Gruppe der keramischen Wandflußfiltersubstrate und Wände mit einer offenporigen Struktur mit einer Porosität von 40 bis 80 % und einem mittleren Porendurchmesser von 9 bis 30 Micrometern aufweist.

11. Katalytisch aktiviertes Dieselpartikelfilter nach Anspruch 1,
    **dadurch gekennzeichnet,**
    **dass** der Filterkörper als Tragkörper für die oxidationsaktive, katalytische Beschichtung dient, wobei sie die gesamte Länge des Bauteils einnimmt, und **dadurch gekennzeichnet,**
    **daß** das mit der oxidationsaktiven, katalytischen Beschichtung versehene Filtersubstrat als Tragkörper für in der SCR-Reaktion katalytisch aktive Beschichtung dient.

12. Katalytisch aktiviertes Dieselpartikelfilter nach Anspruch 11,
    **dadurch gekennzeichnet,**
    **dass** die in der SCR-Reaktion katalytisch aktive Beschichtung 5 bis 50 % der Länge des Bauteils einnimmt und auf der Anströmseite des Bauteils angeordnet ist.

13. Katalytisch aktiviertes Dieselpartikelfilter nach Anspruch 10,
    **dadurch gekennzeichnet,**
    **dass** die oxidationsaktive, katalytische Beschichtung über die gesamte Länge des Bauteils in die Poren der Wände des keramischen Wandflußfiltersubstrats eingebracht und homogen in der jeweiligen Wand des Wandflußfiltersubstrats verteilt ist.

14. Katalytisch aktiviertes Dieselpartikelfilter nach Anspruch 13,
    **dadurch gekennzeichnet,**
    **dass** die oxidationsaktive, katalytische Beschichtung die Poren in den Wänden des keramischen Wandflußfntersubstrates bis zur anströmseitigen Oberfläche der jeweiligen Wand ausfüllt, und die in der SCR-Reaktion katalytisch aktive Beschichtung auf dieser Oberfläche aufgebracht ist.

15. Katalytisch aktiviertes Dieselpartikelfilter nach Anspruch 14,
    **dadurch gekennzeichnet,**
    **dass** die in der SCR-Reaktion aktive, katalytische Beschichtung 5 bis 50 % der Länge des Bauteils einnimmt und auf der Anströmseite des Gesamtbauteils angeordnet ist.

16. Katalytisch aktiviertes Dieselpartikelfilter nach Anspruch 13,
    **dadurch gekennzeichnet,**
    **dass** die oxidationsaktive, katalytische Beschichtung die Poren in den Wänden des keramischen Wandflußfiltersubstrates bis zur abströmseitigen Oberfläche der jeweiligen Wand füllt, und die in der SCR-Reaktion katalytisch aktive Beschichtung ebenfalls in die Poren der Wände eingebracht und homogen in der jeweiligen Wand verteilt ist, jedoch die Poren bis zur anströmseitigen Oberfläche der jeweiligen Wand füllt.

**17.** Abgasreinigungsanlage zur Entfernung von Stickoxiden und Partikeln aus dem Abgas von überwiegend mager betriebenen Verbrennungsmotoren,
**dadurch gekennzeichnet,**
**dass** die Abgasreinigungsanlage einen zur Entfernung von Stickoxiden geeigneten Katalysator und ein katalytisch-aktiviertes Dieselpartikelfilter nach einem der Ansprüche 1 bis 16 enthält.

**18.** Abgasreinigungsanlage nach Anspruch 17,
**dadurch gekennzeichnet,**
**dass** die Abgasreinigungsanlage auf der Anströmseite des katalytisch aktivierten Dieselpartikelfilters eine Einrichtung zur Dosierung von Ammoniak oder einer zu Ammoniak zersetzlichen Verbindung und einen SCR-Katalysator enthält.

**19.** Abgasreinigungsanlage nach Anspruch 18,
**dadurch gekennzeichnet,**
**dass** zwischen dem überwiegend mager betriebenen Verbrennungsmotor und der Einrichtung zur Dosierung von Ammoniak oder einer zu Ammoniak zersetzlichen Verbindung ein Dieseloxidationskatalysator oder ein Dreiwegekatalysator oder ein Stickoxidspeicherkatalysator oder Kombinationen davon angeordnet sind.

**20.** Abgasreinigungsanlage nach Anspruch 17,
**dadurch gekennzeichnet,**
**dass** die Abgasreinigungsanlage auf der Anströmseite des katalytisch aktivierten Dieselpartikelfilters einen Stickoxidspeicherkatalysator enthält.

**Claims**

**1.** Catalytically activated diesel particulate filter comprising a filter body and an oxidation-active catalytic coating, and a further coating which is catalytically active in the SCR reaction and in which an ammonia storage material is present,
**characterized in that**
an arrangement of the layers is maintained such that the exhaust gas to be cleaned firstly passes through the coating which is catalytically active in the SCR reaction and subsequently through the oxidation-active catalytic coating.

**2.** Catalytically activated diesel particulate filter according to Claim 1,
**characterized in that**
the ammonia storage capacity of the coating which is catalytically active in the SCR reaction is at least 20 millimeters per gram of catalyst material.

**3.** Catalytically activated diesel particulate filter according to Claim 2,
**characterized in that**
the coating which is catalytically active in the SCR reaction comprises one or more zeolites which have been exchanged with hydrogen cations or transition metal cations.

**4.** Catalytically activated diesel particulate filter according to Claim 3,
**characterized in that**
the coating which is catalytically active in the SCR reaction comprises one or more zeolites exchanged with iron or copper or iron and copper.

**5.** Catalytically activated diesel particulate filter according to Claim 3,
**characterized in that**
the coating which is catalytically active in the SCR reaction comprises beta-zeolite or Y-zeolite or faujasite or mordenite or ZSM-5 or combinations thereof.

**6.** Catalytically activated diesel particulate filter according to Claim 3,
**characterized in that**
the coating which is catalytically active in the SCR reaction is free of noble metals.

7. Catalytically activated diesel particulate filter according to Claim 1,
**characterized in that**
the oxidation-active catalytic coating is free of zeolites.

8. Catalytically activated diesel particulate filter according to Claim 7,
**characterized in that**
the oxidation-active catalytic coating comprises platinum or palladium or mixtures thereof on a support material selected from the group consisting of high-surface area active aluminum oxide, cerium oxide, zirconium oxide, titanium oxide, silicon oxide and mixtures or mixed oxides thereof.

9. Catalytically activated diesel particulate filter according to Claim 1,
**characterized in that**
the filter body is selected from the group of the ceramic wall flow filter substrates, the sintered metal filter bodies or the ceramic or metallic foam structures.

10. Catalytically activated diesel particulate filter according to Claim 9,
**characterized in that**
the filter body is selected from the group of the ceramic wall flow filter substrates comprising walls with an open-pore structure with a porosity of 40 to 80% and a mean pore diameter of 9 to 30 micrometers.

11. Catalytically activated diesel particulate filter according to Claim 1,
**characterized in that**
the filter body serves as the support body for the oxidation-active catalytic coating, and occupies the entire length of the component,
and is **characterized in that**
the filter substrate provided with the oxidation-active catalytic coating serves as the support body for the coating which is catalytically active in the SCR reaction.

12. Catalytically activated diesel particulate filter according to Claim 11,
**characterized in that**
the coating which is catalytically active in the SCR reaction occupies 5 to 50% of the length of the component and is arranged on the inflow side of the component.

13. Catalytically activated diesel particulate filter according to Claim 10,
**characterized in that**
the oxidation-active catalytic coating is introduced into the pores of the walls of the ceramic wall flow filter substrate over the entire length of the component and is distributed homogeneously in the particular wall of the wall flow filter substrate.

14. Catalytically activated diesel particulate filter according to Claim 13,
**characterized in that**
the oxidation-active catalytic coating fills the pores in the walls of the ceramic wall flow filter substrate up to the inflow-side surface of the particular wall, and the coating which is catalytically active in the SCR reaction is applied to this surface.

15. Catalytically activated diesel particulate filter according to Claim 14,
**characterized in that**
the catalytic coating which is active in the SCR reaction occupies 5 to 50% of the length of the component and is arranged on the inflow side of the overall component.

16. Catalytically activated diesel particulate filter according to Claim 13,
**characterized in that**
the oxidation-active catalytic coating fills the pores in the walls of the ceramic wall flow filter substrate up to the outflow-side surface of the particular wall, and the coating which is catalytically active in the SCR reaction is likewise introduced into the pores of the walls and is distributed homogeneously in the particular wall but fills the pores up to the inflow-side surface of the particular wall.

17. Emission control system for removing nitrogen oxides and particulates from the exhaust gas of internal combustion engines operated under predominantly lean conditions,
**characterized in that**
the emission control system comprises a catalyst suitable for removing nitrogen oxides and a catalytically activated diesel particulate filter according to any one of Claims 1 to 16.

18. Emission control system according to Claim 17,
**characterized in that**
the emission control system comprises upstream of the catalytically activated diesel particulate filter a unit for metered addition of ammonia or of a compound decomposable to ammonia, and an SCR catalyst.

19. Emission control system according to Claim 18,
**characterized in that**
a diesel oxidation catalyst or a three-way catalyst or a nitrogen oxide storage catalyst or combinations thereof is arranged between the internal combustion engine operated under predominantly lean conditions and the unit for metered addition of ammonia or of a compound decomposable to ammonia.

20. Emission control system according to Claim 17,
**characterized in that**
the emission control system comprisesa nitrogen oxide storage catalyst upstream of the catalytically activated diesel particulate filter,

**Revendications**

1. Filtre à particules diesel activé catalytiquement, contenant un corps de filtre et un revêtement catalytique actif en oxydation ainsi qu'un autre revêtement catalytiquement actif dans une réaction SCR et contenant un matériau d'accumulation d'ammoniac,
**caractérisé en ce que**
il présente un système de couches tel que les gaz d'échappement à épurer passent d'abord dans le revêtement catalytiquement actif dans la réaction SCR et ensuite dans le revêtement catalytique actif en oxydation.

2. Filtre à particules diesel activé catalytiquement selon la revendication 1, **caractérisé en ce que** la capacité d'accumulation d'ammoniac du revêtement catalytiquement actif dans la réaction SCR est d'au moins 20 millilitres par gramme de matériau de catalyseur.

3. Filtre à particules diesel activé catalytiquement selon la revendication 2, **caractérisé en ce que** le revêtement catalytiquement actif dans la réaction SCR contient une ou plusieurs zéolithes substituées avec des cations d'hydrogène ou des cations de métaux de transition.

4. Filtre à particules diesel activé catalytiquement selon la revendication 3, **caractérisé en ce que** le revêtement catalytiquement actif dans la réaction SCR contient une ou plusieurs zéolithes substituées avec du fer, du cuivre ou du fer et du cuivre.

5. Filtre à particules diesel activé catalytiquement selon la revendication 3, **caractérisé en ce que** le revêtement catalytiquement actif dans la réaction SCR contient de la zéolithe bêta, de la zéolithe Y, de la faujasite, de la mordénite, du ZSM-5 ou des combinaisons de celles-ci.

6. Filtre à particules diesel activé catalytiquement selon la revendication 3, **caractérisé en ce que** le revêtement catalytiquement actif dans la réaction SCR ne présente pas de métaux précieux.

7. Filtre à particules diesel activé catalytiquement selon la revendication 1, **caractérisé en ce que** le revêtement catalytique actif en oxydation ne présente pas de zéolithe.

8. Filtre à particules diesel activé catalytiquement selon la revendication 7, **caractérisé en ce que** le revêtement catalytique actif en oxydation contient du platine, du palladium ou des mélanges de ceux-ci sur un matériau porteur sélectionné dans l'ensemble constitué des oxydes actifs à haute surface spécifique d'aluminium, de cérium, de zirconium, de titane, de silicium et de leurs mélanges ou oxydes mixtes.

9. Filtre à particules diesel activé catalytiquement selon la revendication 1, **caractérisé en ce que** le corps de filtre est sélectionné dans l'ensemble des substrats de filtre en céramique à écoulement le long des parois, des corps de filtre en métal fritté ou des structures moussées en céramique ou en métal.

10. Filtre à particules diesel activé catalytiquement selon la revendication 9, **caractérisé en ce que** le corps de filtre est sélectionné dans l'ensemble des substrats de filtre en céramique à écoulement le long des parois et des parois à structure poreuse ouverte dont la porosité est de 40 à 80 % et le diamètre moyen des pores de 9 à 30 micromètres.

11. Filtre à particules diesel activé catalytiquement selon la revendication 1, **caractérisé en ce que** le corps de filtre sert de corps porteur pour le revêtement catalytique actif en oxydation qui occupe la totalité de la longueur du composant et **en ce que** le substrat de filtre doté du revêtement catalytique actif en oxydation sert de corps porteur pour le revêtement catalytiquement actif dans la réaction SCR.

12. Filtre à particules diesel activé catalytiquement selon la revendication 11, **caractérisé en ce que** le revêtement catalytiquement actif dans la réaction SCR occupe de 5 à 50 % de la longueur du composant et est disposé sur le côté amont du composant.

13. Filtre à particules diesel activé catalytiquement selon la revendication 10, **caractérisé en ce que** le revêtement catalytique actif en oxydation est apporté sur la totalité de la longueur du composant dans les pores des parois du substrat de filtre en céramique à écoulement le long des parois et est réparti de manière homogène dans chaque paroi du substrat de filtre à écoulement le long des parois.

14. Filtre à particules diesel activé catalytiquement selon la revendication 13, **caractérisé en ce que** le revêtement catalytiquement actif en oxydation remplit les pores des parois du substrat de filtre en céramique à écoulement le long des parois jusqu'à la surface amont de chaque paroi, le revêtement catalytiquement actif dans la réaction SCR étant appliqué sur cette surface.

15. Filtre à particules diesel activé catalytiquement selon la revendication 14, **caractérisé en ce que** le revêtement catalytiquement actif dans la réaction SCR occupe de 5 à 50 % de la longueur du composant et est disposé sur le côté amont du composant global.

16. Filtre à particules diesel activé catalytiquement selon la revendication 13, **caractérisé en ce que** le revêtement catalytiquement actif en oxydation remplit les pores des parois du substrat de filtre en céramique à écoulement le long des parois jusqu'à la surface aval de chaque paroi, le revêtement catalytiquement actif dans la réaction SCR étant également apporté dans les pores des parois et réparti de manière homogène dans chaque paroi mais remplissant les pores de chaque paroi jusqu'à la surface amont.

17. Installation d'épuration des gaz d'échappement en vue de l'élimination des oxydes d'azote et des particules des gaz d'échappement de moteurs à combustion interne utilisés principalement en conditions pauvres, **caractérisée en ce que**
l'installation d'épuration des gaz d'échappement contient un catalyseur qui permet d'éliminer les oxydes d'azote et un filtre à particules diesel activé catalytiquement selon l'une des revendications 1 à 16.

18. Installation d'épuration des gaz d'échappement selon la revendication 17, **caractérisée en ce que** sur le côté amont du filtre à particules diesel activé catalytiquement, l'installation d'épuration des gaz d'échappement contient un dispositif de dosage d'ammoniac ou d'un composé qui se décompose en ammoniac et un catalyseur SCR.

19. Installation d'épuration des gaz d'échappement selon la revendication 18, **caractérisée en ce qu'**entre le moteur à combustion interne utilisé principalement en conditions pauvres et le dispositif de dosage d'ammoniac ou d'un composé qui se décompose en ammoniac sont disposés un catalyseur d'oxydation diesel, un catalyseur trois voies, un catalyseur-accumulateur d'oxydes d'azote ou des combinaisons de ceux-ci.

20. Installation d'épuration des gaz d'échappement selon la revendication 17, **caractérisée en ce que** sur le côté amont du filtre à particules diesel activé catalytiquement, l'installation d'épuration des gaz d'échappement contient un catalyseur-accumulateur d'oxydes d'azote.

**Figur 1**

**Figur 2**

**Figur 3**

**Figur 4**

Figur 5

Figur 6

Figur 7

Figur 8

Figur 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6345496 B1
- DE 3929297 C2
- US 5120695 A
- EP 1399246 B1
- JP 2005238199 A
- WO 9939809 A
- DE 202005008146 U1
- DE 20205008146 U1
- DE 102004040548 A1